# EUROPÄISCHE PATENTSCHRIFT

(11) **EP 1 491 567 B1**
(45) Veröffentlichungstag und Bekanntmachung des Hinweises auf die Patenterteilung: **24.10.2007**
(21) Anmeldenummer: 04013873.7
(22) Anmeldetag: 14.06.2004
(51) Int. Cl.: C08G 59/42, C09D 5/03

(54) **Carboxyfunktionelle Vernetzer für epoxyfunktionelle Pulverlackbindemittel**
Carboxyfunctional crosslinker for epoxyfunctional powder coating binder
Réticulant carboxyfonctionnel pour liant de revêtement en poudre époxyfonctionnel

(30) Priorität: 26.06.2003 DE 10328664
(43) Veröffentlichungstag der Anmeldung: 29.12.2004
(73) Patentinhaber: Bayer MaterialScience AG, 51368 Leverkusen (DE)
(72) Erfinder: Laas, Hans Josef, Dr, 51467 Bergisch Gladbach (DE); Gürtler, Christoph, Dr, 50676 Köln (DE); Halpaap, Reinhard, Dr, 51519 Odenthal (DE); Grahl, Michael, 51371 Leverkusen (DE); Thometzek, Peter, Dr, 70329 Stuttgart (DE); Rawlins, James, Dr., Petal, MS 39465 (US)

(56) Entgegenhaltungen:
- GB-A- 1 562 408
- US-A- 6 084 009
- US-A1- 2002 010 266

## Beschreibung

Die Erfindung betrifft die Verwendung spezieller Gemische von mindestens zwei Polycarbonsäuren als Vernetzerkomponenten für thermisch aushärtende Pulverlackbindemittel mit gegenüber Carboxylgruppen reaktionsfähigen Gruppen, insbesondere als Vemetzer für epoxyfunktionelle Pulverlackbindemittel.

Pulverlacke auf Basis epoxyfunktioneller Bindemittel, sind bekannt und Gegenstand einer Vielzahl von Veröffentlichungen (siehe z. B. EP-B 0 509 393, Seite 2, Zeile 6 bis 17). Als geeignete Vernetzer für derartige Pulverlackbindemittel werden beispielsweise Polycarbonsäuren, darunter insbesondere die aliphatischen Dicarbonsäuren, deren Anhydride bzw. Polyanhydride oder auch carboxyfunktionelle Polyester oder Polyacrylate beschrieben. Aus der Vielzahl der vorgeschlagenen möglichen Vernetzerkomponenten kommt in der Praxis heute allerdings fast ausschließlich Dodecandisäure zur Anwendung. Mit dieser Dodecandisäure gehärtete Pulverbeschichtungen zeichnen sich bei vergleichsweise moderaten Einbrenntemperaturen durch sehr gute optische Eigenschaften, insbesondere einen hervorragenden Verlauf aus. Solche Pulverlacksysteme werden daher mittlerweile auch als Klarlack in der Automobilerstlackierung eingesetzt.

Die besondere Eignung der Dodecandisäure als Pulverlackvemetzer wird unter anderem auf die im festen Zustand sehr geringe Löslichkeit der kristallinen Säure in gylcidylfunktionellen Copolymerisaten, insbesondere Glycidylmethacrylaten (GMA), zurückgeführt. Aufgrund ihres scharfen Schmelzpunktes, der im Bereich der Vemetzungstemperatur liegt, und ihres speziellen Schmelzverhaltens ermöglicht Dodecandisäure in Kombination mit typischen GMA-Harzen die Herstellung von Pulverbeschichtungen, die gegenüber solchen, die beispielsweise mit Azelainsäure oder Sebacinsäure ausgehärtet wurden, eine höhere Härte, höheren Glanz sowie bessere mechanische und chemische Beständigkeiten aufweisen (siehe z. B. Technical Information "Dodecanedioic Acid (DDDA): Curing Agent Applications in Acrylic Powder Coatings"; DuPont Nylon Intermediates and Specialties; 10/97).

Die ausschließliche Konzentration auf Dodecandisäure als Vemetzerkomponente für epoxyfunktionelle Pulverlackbindemittel ist für die technische Anwendung allerdings nicht unproblematisch. Bei einer derart eingeschränkten Rohstoffbasis können Lieferengpässe oder bereits auch Schwankungen in der Rohstoffqualität sehr leicht zu einer Beeinträchtigung der Versorgung der Lackieranlagen mit ausreichenden Mengen an Pulverlack führen. Darüber hinaus steht der hohe Preis der Dodecandisäure bis heute einem größeren Markterfolg säuregehärteter GMA-Pulverlacke entgegen.

Aufgabe der vorliegenden Erfindung war es daher, neue carboxyfunktionelle Vemetzerkomponenten für epoxyfunktionelle Pulverlackbindemittel zur Verfügung zu stellen, die auf gut verfügbaren und preiswerten Rohstoffen basieren und in Kombination mit den üblichen GMA-Harzen zu Beschichtungen aushärten, die in ihrer Qualität solchen, die mit Dodecandisäure vernetzt wurden, zumindest entsprechen. Diese Aufgabe konnte nun durch die Bereitstellung spezieller Polycarbonsäuregemische als Vernetzer gelöst werden.

Die vorliegende Erfindung beruht auf der überraschenden Beobachtung, dass Polycarbonsäuren, die für sich alleine nicht oder nur bedingt als Pulverlackvernetzer einsetzbar sind, sich in Form spezieller Gemische untereinander hervorragend als Vernetzerkomponenten für epoxyfunktionelle Pulverlackbindemittel eignen. Obwohl in der oben zitierten Technical Information "Dodecanedioic Acid" der Fa. DuPont explizit darauf hingewiesen wird, dass Azelainsäure und Sebacinsäure als Pulverlackvernetzer weniger gut geeignet sind, ergeben beispielsweise spezielle Gemische dieser beiden Dicarbonsäuren in Kombination mit üblichen GMA-Harzen Lackfilme, die Dodecandisäure-gehärteten nicht nur in nichts nachstehen sondern sich darüber hinaus durch nochmals verbesserte optische Eigenschaften auszeichnen.

Zwar wird beispielsweise in EP-A 0 997 501, US-A 6 084 009 und WO 00/12581, die sehr spezielle Pulverlackzusammensetzungen auf Basis säurehärtender GMA-Harze beschreiben, innerhalb langer Listen als Vernetzer geeigneter Polycarbonsäuren auch die mögliche Verwendung von Polycarbonsäuregemischen pauschal erwähnt, der Fachmann konnte diesen Veröffentlichungen jedoch keinerlei Hinweise entnehmen, welche Gemische sich tatsächlich zu diesem Zweck eignen könnten, und auf die besondere Eignung der erfindungsgemäß einzusetzenden Polycarbonsäuregemische fehlt in diesen Veröffentlichungen jeder Hinweis. Vielmehr kommen in den Ausführungsbeispielen dieser veröffentlichten Anmeldungen ausschließlich einzelne Dicarbonsäuren, wie Dodecandisäure oder Sebacinsäure, bzw. Polyanhydride wie z. B. Dodecandisäurepolyanhydrid als Vernetzer zum Einsatz.

Die nachfolgend näher beschriebene Verwendung bestimmter Polycarbonsäuregemische als Vernetzerkomponente für epoxyfunktionelle Pulverlackbindemittel wurde bisher noch nicht beschrieben.

Gegenstand der vorliegenden Erfindung sind daher Polycarbonsäuregemische, die unterhalb von 40°C fest und oberhalb von 160°C flüssig sind, wobei diese Gemische aus mindestens zwei jeweils oberhalb von 95°C schmelzenden Polycarbonsäuren mit bis zu 20 Kohlenstoffatomen bestehen und diese Gemische zu mindestens 5 Gew.-% aus der Polycarbonsäure mit dem niedrigsten und zu mindestens 10 Gew.-% aus der Polycarbonsäure mit dem höchsten Schmelzpunkt aller zu mindestens 5 Gew.-% im Gemisch vorliegenden Polycarbonsäuren bestehen.

Gegenstand der vorliegenden Erfindung sind daher auch thermisch aushärtende Pulverlacke bestehend aus
A) einer gegenüber Carboxylgruppen reaktionsfähige Gruppen aufweisenden Bindemittelkomponente und
B) einer Vernetzerkomponente, die ein unterhalb von 40°C in fester und oberhalb von 160°C in flüssiger Form vorliegendes Gemisch aus mindestens zwei jeweils oberhalb von 95°C schmelzenden Polycarbonsäuren mit bis zu 20 Kohlenstoffatomen ist, wobei dieses Gemisch zu mindestens 5 Gew.-% aus der Polycarbonsäure mit dem niedrigsten und zu mindestens 10 Gew.-% aus der Polycarbonsäure mit dem höchsten Schmelzpunkt aller zu mindestens 5 Gew.-% im Gemisch vorliegenden Polycarbonsäuren besteht,
   sowie gegebenenfalls
C) weiteren aus der Pulverlacktechnologie bekannten Hilfs- und Zusatzmitteln,
mit der Maßgabe, dass die Komponenten A) und B) in solchen Mengenverhältnissen vorliegen, dass auf jede gegenüber Carboxylgruppen reaktionsfähige Gruppe der Komponente A) von 0,7 bis 1,5 Carboxylgruppen der Komponente B) entfallen.

Gegenstand der Erfindung ist auch die Verwendung dieser Pulverlacke zur Beschichtung beliebiger Substrate, insbesondere zur Herstellung von Automobilklarlack-Schichten sowie mit diesen Lacken beschichtete Substrate.

Die erfindungsgemäßen Pulverlacke enthalten als Bindemittelkomponente A) die an sich bekannten Pulverlackbindemittel mit gegenüber Carboxylgruppen reaktionsfähigen Gruppen. Hierbei handelt es sich beispielsweise um die bekannten epoxyfunktionellen Pulverlackbindemittel, vorzugsweise um epoxidgruppenhaltige Polyacrylatharze, die nach literaturbekannten Methoden durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, hergestellt werden können. Geeignete epoxidgruppenhaltige Polyacrylatharze sind beispielsweise in EP-A 0 299 420, DE-A 2 214 650, DE-A 2 749 576, US-A 4 091 048 und US-A 3 781 379 beschrieben.

Die zur Herstellung der epoxyfunktionellen Pulverlackbindemittel A) eingesetzten epoxyfunktionellen Monomere sind insbesondere Glycidylacrylat, Glycidylmethacrylat und Allylglycidylether. Als Beispiele für ethylenisch ungesättigte Monomere, die keine Epoxidgruppe im Molekül enthalten, seien beispielhaft genannt: Alkylester der Acryl- und Methacrylsäure mit bis zu 18, vorzugsweise bis zu 8 Kohlenstoffatomen im Alkylrest, wie z. B. Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, tert.-Butylacrylat, tert.-Butylmethacrylat, 2-Ethylhexylacrylat, 2-Ethylhexylmethacrylat, Neopentylacrylat, Neopentylmethacrylat, Stearylmethacrylat, die Cyclohexyl-, Isobornyl-, 3,3,5-Trimethylcyclohexyl-, Phenyl-, Benzyl- oder 2-Phenylester von Acrylsäure und Methacrylsäure, aber auch Maleinsäure- bzw. Fumarsäuredialkylester oder -cycloalkylester mit bis zu 8 Kohlenstoffatomen in den Alkylresten, wie z.B. Maleinsäuredimethylester, Maleinsäurediethylester, Maleinsäurediisopropylester, Maleinsäurediisobutylester, Maleinsäuredi-tert.-butylester, Maleinsäuredicyclohexylester und die entsprechenden Fumarsäuredialkylester.

Weitere Beispiele für ethylenisch ungesättigte Monomere, die keine Epoxidgruppen im Molekül enthalten, sind Säureamide, wie z. B. Acrylsäure- und Methacrylsäureamid, vinylaromatische Verbindungen, wie z. B. Styrol, Methylstyrol und Vinyltoluol, Nitrile, wie z. B. Acrylnitril und Methacrylnitril, Vinyl- und Vinylidenhalogenide, wie z. B. Vinylchlorid und Vinylidenfluorid, Vinylester, wie z. B. Vinylacetat, sowie Hydroxyalkylester der Acryl- oder Methacrylsäure mit 2 bis 8, vorzugsweise 2 bis 4 Kohlenstoffatomen im Hydroxyalkylrest, wie z.B. Hydroxyethylacrylat, Hydroxyethylmethacrylat, Hydroxypropylacrylat, Hydroxypropylmethacrylat, insbesondere die Anlagerungsprodukte von Propylenoxid an Acryl- bzw Methacrylsäure, und 2- oder 4-Hydroxybutylacrylat oder -methacrylat.

Die in den erfindungsgemäßen Pulverlacken als Bindemittelkomponente A) bevorzugt eingesetzten epoxyfunktionellen Polyacrylatharze weisen üblicherweise eine durch Differential Scanning Calorimetrie (DSC) bestimmte Glasübergangstemperatur (Tg) im Bereich von 20 bis 100°C, vorzugsweise von 30 bis 90°C, und ein gelpermeationschromatographisch unter Verwendung von Polystyrol als Standard bestimmtes mittleres Molekulargewicht (Mw) von 1500 bis 30000, vorzugsweise 2000 bis 20000 auf. Das Epoxyäquivalentgewicht beträgt 365 bis 2840, vorzugsweise 430 bis 1420.

Als epoxyfunktionelle Pulverlackbindemittel A) prinzipiell ebenfalls geeignet sind epoxyfunktionelle Polykondensationsharze, wie z. B. die bekannten Umsetzungsprodukte von Epichlorhydrin mit mehrwertigen Phenolen sowie Novolaken auf Phenolbasis.

Die vorstehend beschriebenen Bindemittelkomponenten A) werden in den erfindungsgemäßen Pulverlacken mit den erfindungsgemäßen carboxyfunktionellen Vernetzerkomponenten B) kombiniert. Hierbei handelt es sich unterhalb von 40°C in fester und oberhalb von 160°C in flüssiger Form vorliegende Gemische aus mindestens zwei oberhalb von 95°C schmelzenden Polycarbonsäuren mit bis zu 20 Kohlenstoffatomen, die zu mindestens 5 Gew.-% aus der Polycarbonsäure mit dem niedrigsten und zu mindestens 10 Gew.-% aus der Polycarbonsäure mit dem höchsten Schmelzpunkt aller zu mindestens 5 Gew.-% im Gemisch vorliegenden Polycarbonsäuren bestehen.

Geeignete Polycarbonsäuren zur Herstellung von Polycarbonsäuregemischen B) sind beliebige mehrwertige Carbonsäuren aliphatischer, cycloaliphatischer, aromatischer und/oder heteroaromatischer Natur, die bis zu 20 Kohlenstoffatome aufweisen und gegebenenfalls, z.B. durch Halogenatome, substituiert und/oder ungesättigt sein können.

Geeignet sind beispielsweise di- und trifunktionelle Carbonsäuren des Molekulargewichtsbereiches 104 bis 370, wie z.B. Malonsäure, Bernsteinsäure, Glutarsäure, Adipinsäure, Pimelinsäure, Suberinsäure, Azelainsäure, Sebacinsäure, Undecandisäure, Dodecandisäure, Tridecandisäure, Tetradecandisäure, Pentadecandisäure, Hexadecandisäure, Octadecandisäure, Eicosandisäure, die isomeren Cyclohexandicarbonsäuren, Maleinsäure, Phthalsäure, Isophthalsäure, Terephthalsäure, Tetrahydrophthalsäure, Trimellithsäure oder die isomeren Pyridindicarbonsäuren.

Besonders geeignete Polycarbonsäuren sind die gesättigten aliphatischen und/oder cycloaliphatischen Dicarbonsäuren mit 4 bis 20 Kohlenstoffatomen. Ganz besonders bevorzugt sind die genannten linearen aliphatischen Dicarbonsäuren mit 5 bis 12 Kohlenstoffatomen.

Erfindungsgemäß kommen Gemische von mindestens zwei, vorzugsweise mindestens drei solcher Polycarbonsäuren als Vernetzer für epoxyfunktionelle Pulverlackbindemittel zum Einsatz.

Die zur Herstellung der Polycarbonsäuregemische eingesetzten mehrwertigen Carbonsäuren enthalten in ihrer im technischen Maßstab zur Verfügung stehenden Qualität häufig mehr oder weniger große Mengen an Nebenprodukten, darunter in untergeordneten Mengen gebenenfalls auch weitere Polycarbonsäuren. Solche mit anderen Polycarbonsäuren "verunreinigte" Polycarbonsäuren stellen im Sinne der vorliegenden Erfindung jedoch keine Polycarbonsäuregemische dar. Vielmehr kommen erfindungsgemäß Polycarbonsäuregemische zum Einsatz, in denen die Polycarbonsäuren in solchen Mengenverhältnissen vorliegen, dass die Polycarbonsäure mit dem niedrigsten Schmelzpunkt aller im Gemisch zu mindestens 5 Gew.-% vorliegenden Polycarbonsäuren zu mindestens 5 Gew.-%, vorzugsweise mindestens 10 Gew.-%, ganz besonders bevorzugt zu mindestens 15 Gew.-%, und die Polycarbonsäure mit dem höchsten Schmelzpunkt aller zu mindestens 5 Gew.-% im Gemisch vorliegenden Polycarbonsäuren zu mindestens 10 Gew.-%, vorzugsweise mindestens 20 Gew.-%, ganz besonders bevorzugt zu mindestens 25 Gew.-% enthalten ist.

Gegebenenfalls enthalten die erfindungsgemäßen Pulverlacke weitere Hilfs- und Zusatzmittel C), wie z. B. Aushärtungskatalysatoren, Pigmente, Füllstoffe oder Verlaufsmittel.

Bei den gegebenenfalls zur Beschleunigung der Aushärtung mitzuverwendenden Katalysatoren handelt es sich in der Regel um die üblichen literaturbekannten Verbindungen, die geeignet sind, die Reaktion zwischen Carboxyl- und Epoxidgruppen zu beschleunigen, beispielsweise um Tetraalkylammoniumsalze, wie z. B. Tetrabutylammoniumchlorid, -bromid oder -iodid, Tetraethylammoniumchlorid, -bromid oder -iodid, Trimethylbenzylammoniumchlorid, Dodecyldimethyl-(2-phenoxyethyl)-ammoniumbromid oder Diethyl-(2-hydroxyethyl)-methylammoniumbromid, um Katalysatoren mit Imidazolstruktur, wie z. B. Imidazol, 2-Methylimidazol, 2-Methyl-4-ethylimidazol, 2-[(N-Benzylanilino)-methyl]-2-imidazolinphosphat oder 2-Benzyl-2-imidazolinhydrochlorid, um tert. Amine, wie z. B. N,N-Dimethylcyclohexylamin, N,N-Diethylcyclohexylamin, N-Methylpiperidin, N-Methylmorpholin, Pentamethyldiethylentriamin, N,N'-Dimethylpiperazin oder 1,4-Diazabicyclo[2,2,2]octan, oder um Metallsalze, wie z..B. Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat, oder um beliebige Gemische solcher Katalysatoren.

Diese Katalysatoren können gegebenenfalls in Mengen von vorzugsweise 0,01 bis 5,0 Gew.-%, besonders bevorzugt zu 0,05 bis 2,0 Gew.-%, bezogen auf die Gesamtmenge an organischem Bindemittel, d.h. Polycarbonsäuregemischen in Kombination mit den epoxyfunktionellen Pulverlackbindemitteln aber exklusive den gegebenenfalls verwendeten weiteren Hilfs- und Zusatzmitteln, zugesetzt werden.

Weitere Hilfs- und Zusatzmittel C), die bei der Herstellung der Pulverlacke gegebenenfalls zugesetzt werden können, sind beispielsweise die üblichen Pigmente und Füllstoffe, die aus der Pulverlacktechnologie bekannten Verlaufsmittel, wie z. B. Polybutylacrylat oder solche auf Basis von Polysilikonen, Lichtschutzmittel, wie z. B. sterisch gehinderte Amine, UV-Absorber, wie z. B. Benztriazole oder Benzophenone sowie Farbstabilisatoren gegen die Gefahr der Überbrennvergilbung, wie z. B. gegebenenfalls inerte Substituenten aufweisende, Trialkyl-, Triaryl- und/oder Trisalkylphenylphosphite.

Zur Herstellung eines gebrauchsfertigen erfindungsgemäßen Pulverlacks werden die vorstehend beschriebenen epoxyfunktionellen Pulverlackbindemittel A) und Polycarbonsäuregemische B) gemischt, gegebenenfalls mit weiteren Hilfs- und Zusatzmitteln C) versetzt, und beispielsweise in Extrudern oder Knetern in der Regel bei Temperaturen oberhalb des Schmelzbereichs der Einzelkomponenten, beispielsweise bei Temperaturen von 70 bis 130°C, vorzugsweise von 70 bis 110°C, zu einem homogenen Material vereinigt.

Dabei können die jeweils das Polycarbonsäuregemisch B) bildenden mehrwertigen Carbonsäuren beispielsweise als Einzelkomponenten und in beliebiger Reihenfolge mit den epoxyfunktionellen Polyacrylatharzen A) und den gegebenenfalls mitverwendeten Hilfs- und Zusatzmitteln C) vermischt werden.

Bevorzugt werden die einzelnen mehrwertigen Carbonsäuren jedoch in einem der eigentlichen Pulverlackherstellung vorgelagerten Schritt im oben angegebenen Mischungsverhältnis so vorgemischt, dass homogene Polycarbonsäuregemische B) resultieren. Dies kann beispielsweise in Schmelze bei Temperaturen oberhalb des Mischschmelzpunktes der Einzelkomponenten, vorzugsweise im Temperaturbereich von 95 bis 170°C, besonders bevorzugt von 100 bis 150°C erfolgen. Es ist beispielsweise jedoch auch möglich die mehrwertigen Carbonsäuren in geeigneten Lösungsmitteln oder Lösungsmittelgemischen gelöst miteinander zu mischen und in einem anschließenden Verfahrensschritt, z. B. durch Sprühtrocknung oder in einer Ausdampfschnecke die resultierenden homogenen Polycarbonsäuregemische B) vom Lösungsmittel zu befreien.

Unabhängig von der Art der Zugabe, bspw. als Einzelkomponenten oder in vorgemischter Form, werden die vorstehend beschriebenen Polycarbonsäuregemische B) mit den gegenüber Carboxylgruppen reaktiven, vorzugsweise epoxyfunktionellen Pulverlackbindemittel A) bei der Pulverlackherstellung in solchen Mengen kombiniert, die einem Äquivalentverhältnis von Carboxylgruppen zu gegenüber Carboxylgruppen reaktionsfähigen Gruppen, insbesondere Epoxidgruppen, von 1,5 : 1 bis 0,7 : 1, vorzugsweise von 1,3 : 1 bis 0,8 : 1, besonders bevorzugt 1,1 : 1 bis 0,9 : 1 entsprechen.

Die Herstellung der erfindungsgemäßen Pulverlacke erfolgt vorzugsweise, wie vorstehend beschrieben, in einem lösemittelfreien Prozess in Schmelze. Selbstverständlich ist es jedoch auch möglich, sämtliche Einzelkomponenten A), B) und C) des Pulverlacksystems in geeigneten Lösungsmitteln oder Lösungsmittelgemischen gelöster Form miteinander zu mischen.

Geeignete Lösungsmittel für diese weniger bevorzugte Vorgehensweise sind beispielsweise die an sich bekannten üblichen Lacklösungsmittel wie z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, oder deren Gemische, aber auch Lösungsmittel wie Aceton, Propylenglykoldiacetat, Diethylenglykoldimethylether, Diethylenglykolethyl- und -butyletheracetat, N-Methylpyrrolidon, N-Methylcaprolactam, N,N-Dimethylformamid, N,N-Dimethylacetamid und Methylenchlorid oder Gemische solcher Lösungsmittel.

Diese gegebenenfalls mit verwendeten Lösungsmittel werden nach erfolgter Homogenisierung der Einzelkomponenten mit Hilfe geeigneter Methoden, beispielsweise durch Ausfällen und einfaches Absaugen, Sprühtrocknung oder Schmelzextrusion in einer Ausdampfschnecke, vom erfindungsgemäßen Pulverlack abgetrennt.

Unabhängig von dem für die Pulverlackherstellung gewählten Verfahren wird der nach Abkühlen der Extrusionsschmelze oder Entfernung der mit verwendeten Lösungsmittel resultierende Feststoff anschließend gemahlen und durch Sieben von den Kornanteilen oberhalb der gewünschten Korngröße, beispielsweise oberhalb 0,1 mm, befreit.

Der so hergestellte sprühfertige Pulverlack kann nach üblichen Pulverauftragsverfahren, wie z. B. elektrostatischem Pulverversprühen oder Wirbelsintern, auf die zu überziehenden Substrate aufgebracht werden. Erfindungsgemäß können beliebige hitzeresistente Substrate, wie beispielsweise solche aus Metallen, Kunststoffen, Holz oder Glas, beschichtet werden. Vorzugsweise dienen die erfindungsgemäß hergestellten Pulverlackformulierungen zur Herstellung von Beschichtungen für Automobilanwendungen, insbesondere zur Herstellung von Automobilklarlacken.

Die Härtung der Überzüge erfolgt durch Erhitzen auf Temperaturen von 110 bis 220°C, vorzugsweise 130 bis 180°C, beispielsweise während eines Zeitraumes von 10 bis 60 Minuten, vorzugsweise 10 bis 30 Minuten. Man erhält harte und elastische Beschichtungen mit guter Lösemittel- und Chemikalienbeständigkeit, die einen hervorragenden Verlauf aufweisen. Wie die nachfolgenden Beispiele zeigen, führen die erfindungsgemäßen Pulverlacke, die als Vernetzerkomponenten spezielle Polycarbonsäuregemische enthalten, zu Beschichtungen, die gegenüber solchen, die mit reinen Polycarbonsäuren, insbesondere mit Dodecandisäure ausgehärtet wurden, mindestens gleich gute chemische und mechanische Beständigkeiten aufweisen, sich darüber hinaus aber durch einen deutlich höheren Glanz auszeichnen.

### Beispiele

Die folgenden Beispiele dienen zur weiteren Erläuterung der Erfindung.

### Herstellung von Polycarbonsäuregemischen B)

### Polycarbonsäuregemisch B1)

300 g Adipinsäure (Schmelzpunkt: 148°C) und 700 g Sebacinsäure (Smp.: 131°C) wurden gemeinsam in einem Planschliffgefäß unter trockenem Stickstoff vorgelegt und bei einer Temperatur von 140°C aufgeschmolzen. Die Schmelze wurde 5 min intensiv gerührt und anschließend zum Erkalten auf ein Blech gegossen. Nach Abkühlen auf Raumtemperatur lag ein Polycarbonsäuregemisch mit einem Schmelzpunkt von 120°C und einem Äquivalentgewicht von 89 g/val COOH vor.

### Polycarbonsäuregemische B2) bis B6)

Nach dem vorstehend beschriebenen Verfahren wurden unter Verwendung von Sebacinsäure (Smp.: 131°C), Azelainsäure (Smp.: 101°C), Dodecandisäure (Smp.: 129°C) und Adipinsäure (Smp.: 148°C) Polycarbonsäuregemische hergestellt. Die nachfolgende Tabelle zeigt die Zusammensetzungen und Kenndaten der hergestellten Polycarbonsäuregemische:

| **Polycarbonsäuregemisch** | | **B2)** | **B3)** | **B4)** | **B5)** | **B6)** |
|---|---|---|---|---|---|---|
| Sebacinsäure | [Gew.-Teile] | 20 | 40 | - | - | 40 |
| Azelainsäure | [Gew.-Teile] | 80 | 60 | - | - | - |
| Dodecandisäure | [Gew.-Teile] | - | - | 80 | 60 | 40 |
| Adipinsäure | [Gew.-Teile] | - | - | 20 | 40 | 20 |
| Schmelzpunkt | [°C] | 96 | 108 | 121 | 132 | 102 |
| Äqivalentgewicht | [g/val COOH] | 95 | 96 | 101 | 94 | 98 |

### Beispiel 1 (erfindungsgemäß [a] und Vergleich [b])

[a] 81,0 Gew.-Teile eines handelsüblichen glycidylgruppenhaltigen Polyacrylates (Almatex® PD 7610, Anderson Development Company, Adrian, MI) mit einem Epoxid-Gehalt von 7,8 Gew.-% (Äquivalentgewicht 551 g/val Epoxid) wurden mit 17,4 Gew.-Teilen des Polycarbonsäuregemisches B1), entsprechend einem Äquivalentverhältnis von Carboxyl- zu Glycidylgruppen von 1:1, 1,0 Gew.-Teilen eines handelsüblichen Verlaufsmittels (Worlée® Add 101, Worlée-Chemie GmbH, Hamburg), 0,3 Gew.-Teilen Zinn(II)-palmitat als Katalysator und 0,3 Gew.-Teilen Benzoin gründlich gemischt und anschließend mit Hilfe eines Doppelwellenextruders der Fa. APV Baker Inc. (Grand Rapids, MI) vom Typ MP 19 PC bei 300 U/min und einer Gehäusetemperatur von 100 bis 110°C im Verfahrensteil homogenisiert. Nach Abkühlen wird die erstarrte Schmelze mit Hilfe einer Sichtermühle ICM 4 (Neumann & Esser Deutschland GmbH & Co. KG, Übach-Palenberg) mit einem Sieb der Maschenweite 90 µm gemahlen und gesiebt.
[b] Zum Vergleich wurde analog aus 81,0 Gew.-Teilen Almatex® PD 7610 mit 17,4 Gew.-Teilen Dodecandisäure als Vernetzer, 1,0 Gew.-Teilen Worlée® Add 101, 0,3 Gew.-Teilen Zinn(II)-palmitat und 0,3 Gew.-Teilen Benzoin ein Pulverklarlack hergestellt. Das Äquivalentverhältnis von Carboxyl- zu Glycidylgruppen lag ebenfalls bei 1:1.

Die beiden so erhaltenen Pulverlacke wurden mit einer ESB-Becherpistole bei einer Hochspannung von 70 KV auf entfettete, grau vorbeschichtete Coilcoat-Stahlbleche gespritzt und jeweils 30 min bei einer Temperatur von 145°C ausgehärtet. Beide Beschichtungen zeigen einen hervorragenden Verlauf. Bei Schichtdicken von etwa 70 µm wurden folgende lacktechnischen Eigenschaften gefunden:

### Pulverklarlack vernetzt mit

| | | Polycarbonsäuregemisch B1) (erfindungsgemäß [a]) | Dodecandisäure (Vergleich [b]) |
|---|---|---|---|
| Gelierzeit / 160°C | [s] | 69 | 83 |
| Verlauf (visuell)^{a)} | | ++ | ++ |
| Pendelhärte ^{b)} | [s] | 170 | 171 |
| Glanz ^{c)} | 20° | 81,8 | 76,8 |
| | 60° | 91,5 | 90,3 |
| | 85° | 99,4 | 96,0 |
| Vergilbung ^{d)} Δb | | 0,36 | 0,33 |
| Acetontest ^{e)} | DH | 50 | 50 |
| | Urteil | 0 | 0 |

| | | | |
|---|---|---|---|
| ^{a)} Beurteilung: ++ sehr gut, + gut, 0 mäßig, - schlecht ^{b)} Pendelhärte nach König (DIN 53157) ^{c)} Glanz = Glanz nach Gardner; 20°, 60° bzw. 85° Reflexionswinkel ^{d)} b-Wert des Untergrundes: -4,27 ^{e)} DH = Anzahl der Doppelhübe mit getränktem Wattebausch Urteil: 0 = Film intakt 1 = Filmoberfläche angeweicht 2 = Film bis zum Untergrund angequollen 3 = Film aufgelöst m = matt (Glanzverlust) | | | |

Der Vergleich zeigt, dass der erfindungsgemäße Pulverlack, der eine Vernetzerkomponente auf Basis der preiswerten Dicarbonsäuren Adipinsäure und Sebacinsäure enthält, gegenüber dem Dodecandisäure-vemetzten Lack eine höhere Reaktivität aufweist und sich durch einen höheren Glanz auszeichnet.

Zur Überprüfung der Lagerstabilität wurden Proben der beiden Pulverlacke bei einer Temperatur von 40°C gelagert und in regelmäßigen Abständen auf Rieselfähigkeit geprüft. Beide Pulver waren nach 14-tägiger Lagerung unverändert, es traten keinerlei Verklumpungen auf.

### Beispiele 2 bis 7 (erfindungsgemäß) und 8 bis 10 (Vergleich)

Nach dem in Beispiel 1 beschriebenen Verfahren wurden ausgehend vom dem in Beispiel 1 beschriebenen glycidylgruppenhaltigen Polyacrylat Almatex® PD 7610 und den Polycarbonsäuregemischen B2) bis B6) Pulverklarlacke hergestellt. Der Pulverlack aus Beispiel 7 entspricht in seiner Bruttozusammensetzung dem Pulverlack aus Beispiel 2. Die das Vernetzergemisch bildenden Dicarbonsäuren wurden bei Beipiel 7 jedoch nicht in vorgemischter Form sondern als Einzelkomponenten der Formulierung zugemischt.

Zum Vergleich wurden auf analoge Weise Pulverlacke hergestellt, die jeweils nur eine einzelne Dicarbonsäure als Vernetzer enthielten.

Mit einer ESB-Becherpistole wurden alle Pulverlacke bei einer Hochspannung von 70 KV auf entfettete Stahlbleche gespritzt und 30 min bei 145°C ausgehärtet. Die nachfolgende Tabelle zeigt die Zusammensetzungen (Gew.-Teile) der Pulverlacke sowie die lacktechnischen Daten der daraus erhaltenen Beschichtungen (Beurteilung wie in Beispiel 1).

Die Beispiele belegen, dass die erfindungsgemäßen Pulverlacke 2 bis 7, die unter Verwendung von Polycarbonsäuregemischen hergestellt wurden, im Vergleich zu den Pulverlacken, die mit reinen Dicarbonsäuren ausgehärtet wurden (1[b] und 8 bis 10), zu Beschichtungen führen, die sich durch einen höheren Glanz auszeichnen.

Wie in Beispiel 1 beschrieben, wurden Proben der Pulverlacke 2 bis 10 zur Überprüfung der Lagerstabilität bei einer Temperatur 40°C gelagert. Mit Ausnahme des Pulverlackes aus Vergleichsbeispiel 9, der bereits nach 1 Tag Agglomeratbildung zeigte, blieben sämtliche Pulverlacke über 14 Tage rieselfähig.

| Beispiel | | 2 | 3 | 4 | 5 | 6 | 7 | 8 (Vergleich) | 9 (Vergleich) | 10 (Vergleich) |
|---|---|---|---|---|---|---|---|---|---|---|
| Almatex® PD 7610 | | 83,6 | 83,4 | 82,8 | 83,7 | 83,5 | 83,5 | 86,9 | 84,1 | 83,1 |
| Polycarbonsäure- | B2) | 14,8 | - | - | - | - | - | - | - | - |
| mischung | | | | | | | | | | |
| | B3) | - | 15,0 | - | - | - | - | - | - | - |
| | B4) | - | - | 15,6 | - | - | - | - | - | - |
| | B5) | - | - | - | 14,7 | - | - | - | - | - |
| | B6) | - | - | - | - | 14,9 | - | - | - | - |
| Adipinsäure | | - | - | - | - | - | - | 11,5 | - | - |
| Azelainsäure | | - | - | - | - | - | 11,9 | - | 14,3 | - |
| Sebacinsäure | | - | - | - | - | - | 3,0 | - | - | 15,3 |
| Worlée® Add 101 | | 1,0 | 1,0 | 1,0 | 1,0 | 1,0 | 1,0 | 1,0 | 1,0 | 1,0 |
| Benzoin | | 0,3 | 0,3 | 0,3 | 0,3 | 0,3 | 0,3 | 0,3 | 0,3 | 0,3 |
| Zinn(II)-palmitat | | 0,3 | 0,3 | 0,3 | 0,3 | 0,3 | 0,3 | 0,3 | 0,3 | 0,3 |
| Gelierzeit 160°C [s] | | 71 | 74 | 67 | 62 | 66 | 76 | 50 | 79 | 81 |
| Schichtdicke [µm] | | 62 -72 | 52 -74 | 73 -78 | 53 -56 | 63 -70 | 69 -78 | 53 -65 | 59 -73 | 66 -71 |
| Pendelhärte [s] | | 171 | 172 | 174 | 174 | 174 | 170 | 177 | 165 | 167 |
| Verlauf (visuell) | | ++ | ++ | ++ | ++ | ++ | ++ | - | ++ | ++ |
| Glanz | 20° | 82,2 | 84,2 | 79,5 | 82,7 | 83,1 | 79,1 | 63,5 | 74,8 | 73,8 |
| | 60° | 91,4 | 91,6 | 91,5 | 91,7 | 91,6 | 89,8 | 81,2 | 85,7 | 83,3 |
| | 85° | 100,0 | 101,1 | 97,8 | 99,3 | 99,5 | 98,8 | 90,1 | 95,0 | 95,6 |
| Vergilbung Δb | | 0,28 | 0,31 | 0,30 | 0,35 | 0,32 | 0,30 | 0,30 | 0,56 | 0,33 |
| Acetontest | DH | 50 | 50 | 50 | 50 | 50 | 50 | 50 | 50 | 50 |
| | Urteil | 0 | 0 | 0 | 0 | 0 | 0 | 0 | 0 | 0 |

## Patentansprüche

1. Polycarbonsäuregemische, die unterhalb von 40°C fest und oberhalb von 160°C flüssig sind, wobei diese Gemische aus mindestens zwei jeweils oberhalb von 95°C schmelzenden Polycarbonsäuren mit bis zu 20 Kohlenstoffatomen bestehen und zu mindestens 5 Gew.-% aus der Polycarbonsäure mit dem niedrigsten und zu mindestens 10 Gew.-% aus der Polycarbonsäure mit dem höchsten Schmelzpunkt aller zu mindestens 5 Gew.-% im Gemisch vorliegenden Polycarbonsäuren.

2. Gemische nach Anspruch 1, **dadurch gekennzeichnet, dass** sie zu mindestens 10 Gew.-% aus der Polycarbonsäure mit dem niedrigsten und zu mindestens 20 Gew.-% aus der Polycarbonsäure mit dem höchsten Schmelzpunkt aller zu mindestens 5 Gew.-% im Gemisch vorliegenden Polycarbonsäuren bestehen.

3. Gemische nach Anspruch 1, **dadurch gekennzeichnet, dass** sie zu mindestens 15 Gew.-% aus der Polycarbonsäure mit dem niedrigsten und zu mindestens 25 Gew.-% aus der Polycarbonsäure mit dem höchsten Schmelzpunkt aller zu mindestens 5 Gew.-% im Gemisch vorliegenden Polycarbonsäuren besteht.

4. Thermisch aushärtender Pulverlack, enthaltend
A) eine gegenüber Carboxylgruppen reaktionsfähige Gruppen aufweisende Bindemittelkomponente und
B) ein unterhalb von 40°C in fester und oberhalb von 160°C in flüssiger Form vorliegendes Gemisch aus mindestens zwei oberhalb von 95°C schmelzenden Polycarbonsäuren mit bis zu 20 Kohlenstoffatomen, das zu mindestens 5 Gew.-% aus der Polycarbonsäure mit dem niedrigsten und zu mindestens 10 Gew.-% aus der Polycarbonsäure mit dem höchsten Schmelzpunkt aller zu mindestens mit 5 Gew.-% im Gemisch vorliegenden Polycarbonsäuren besteht als Vernetzerkomponente,
sowie gegebenenfalls
C) weitere aus der Pulverlacktechnologie bekannte Hilfs- und Zusatzmittel,
mit der Maßgabe, dass die Komponenten A) und B) in solchen Mengenverhältnissen vorliegen, dass auf jede gegenüber Carboxylgruppen reaktionsfähige Gruppe der Komponente A) von 0,7 bis 1,5 Carboxylgruppen der Komponente B) entfallen.

5. Pulverlack gemäß Anspruch 4, **dadurch gekennzeichnet, dass** als Bindemittelkomponente A) ein epoxyfunktionelles Polyacrylatharz eingesetzt wird.

6. Pulverlack gemäß Anspruch 4, **dadurch gekennzeichnet, dass** als Vernetzerkomponente B) ein Gemisch von mindestens zwei Polycarbonsäuren eingesetzt wird, das zu mindestens 10 Gew.-% aus der Polycarbonsäure mit dem niedrigsten und zu mindestens 20 Gew.-% aus der Polycarbonsäure mit dem höchsten Schmelzpunkt aller zu mindestens 5 Gew.-% im Gemisch vorliegenden Polycarbonsäuren besteht.

7. Pulverlack gemäß Anspruch 4, **dadurch gekennzeichnet, dass** als Vernetzerkomponente B) ein Gemisch von mindestens zwei Polycarbonsäuren eingesetzt wird, das zu mindestens 15 Gew.-% aus der Polycarbonsäure mit dem niedrigsten und zu mindestens 25 Gew.-% aus der Polycarbonsäure mit dem höchsten Schmelzpunkt aller zu mindestens 5 Gew.-% im Gemisch vorliegenden Polycarbonsäuren besteht.

8. Pulverlack gemäß Anspruch 4, **dadurch gekennzeichnet, dass** als Vernetzerkomponente B) ein Gemisch von mindestens zwei aliphatischen und/oder cycloaliphatischen Polycarbonsäuren mit 4 bis 20 Kohlenstoffatomen eingesetzt wird.

9. Pulverlack gemäß Anspruch 4, **dadurch gekennzeichnet, dass** als Vernetzerkomponente B) ein Gemisch von mindestens zwei linearen aliphatischen Dicarbonsäuren mit 5 bis 12 Kohlenstoffatomen eingesetzt wird.

10. Pulverlack gemäß Anspruch 4, **dadurch gekennzeichnet, dass** als Vernetzerkomponente B) ein Gemisch von mindestens drei linearen aliphatischen Dicarbonsäuren mit 5 bis 12 Kohlenstoffatomen eingesetzt wird.

11. Pulverlack gemäß Anspruch 4, **dadurch gekennzeichnet, dass** als Vernetzerkomponente B) ein Gemisch von Polycarbonsäuren eingesetzt wird, das in einem der Pulverlackherstellung vorgelagerten Schritt homogen vorgemischt wurde.

12. Verwendung von Pulverlacken gemäß Anspruch 4 zur Beschichtung beliebiger Substrate.

13. Verwendung des Pulverlacks gemäß Anspruch 4 zur Herstellung von Automobilklarlacken.

14. Mittels Pulverlacken gemäß Anspruch 4 beschichtete Substrate.

## Claims

1. Polycarboxylic-acid mixtures that are solid below 40 °C and liquid above 160 °C, said mixtures consisting of at least two polycarboxylic acids each melting above 95 °C with up to 20 carbon atoms and, in a proportion amounting to at least 5 wt.%, of the polycarboxylic acid with the lowest melting-point and, in a proportion amounting to at least 10 wt.%, of the polycarboxylic acid with the highest melting-point of all the polycarboxylic acids present in the mixture in a proportion amounting to at least 5 wt.%.

2. Mixtures according to Claim 1, **characterised in that** they consist, in a proportion amounting to at least 10 wt.%, of the polycarboxylic acid with the lowest melting-point and, in a proportion amounting to at least 20 wt.%, of the polycarboxylic acid with the highest melting-point of all the polycarboxylic acids present in the mixture in a proportion amounting to at least 5 wt.%.

3. Mixtures according to Claim 1, **characterised in that** they consist, in a proportion amounting to at least 15 wt.%, of the polycarboxylic acid with the lowest melting-point and, in a proportion amounting to at least 25 wt.%, of the polycarboxylic acid with the highest melting-point of all the polycarboxylic acids present in the mixture in a proportion amounting to at least 5 wt.%.

4. A thermally curing powder lacquer containing
A) a binding-agent component comprising groups that are capable of reacting with carboxyl groups and
B) a mixture, which is present in solid form below 40 °C and in liquid form above 160 °C, of at least two polycarboxylic acids melting above 95 °C with up to 20 carbon atoms, said mixture consisting, in a proportion amounting to at least 5 wt.%, of the polycarboxylic acid with the lowest melting-point and, in a proportion amounting to at least 10 wt.%, of the polycarboxylic acid with the highest melting-point of all the polycarboxylic acids present in the mixture in a proportion amounting to at least 5 wt.%,
and also, optionally,
C) further auxiliary agents and additives known from powder-lacquer technology,
with the proviso that the components A) and B) are present in such quantitative ratios that from 0.7 to 1.5 carboxyl groups of component B) are allotted to each group of component A) that is capable of reacting with carboxyl groups.

5. Powder lacquer according to Claim 4, **characterised in that** an epoxy-functional polyacrylate resin is employed as binding-agent component A).

6. Powder lacquer according to Claim 4, **characterised in that** by way of crosslinker component B) a mixture of at least two polycarboxylic acids is employed that consists, in a proportion amounting to at least 10 wt.%, of the polycarboxylic acid with the lowest melting-point and, in a proportion amounting to at least 20 wt.%, of the polycarboxylic acid with the highest melting-point of all the polycarboxylic acids present in the mixture in a proportion amounting to at least 5 wt.%.

7. Powder lacquer according to Claim 4, **characterised in that** by way of crosslinker component B) a mixture of at least two polycarboxylic acids is employed that consists, in a proportion amounting to at least 15 wt.%, of the polycarboxylic acid with the lowest melting-point and, in a proportion amounting to at least 25 wt.%, of the polycarboxylic acid with the highest melting-point of all the polycarboxylic acids present in the mixture in a proportion amounting to at least 5 wt.%.

8. Powder lacquer according to Claim 4, **characterised in that** a mixture of at least two aliphatic and/or cycloaliphatic polycarboxylic acids with 4 to 20 carbon atoms is employed as crosslinker component B).

9. Powder lacquer according to Claim 4, **characterised in that** a mixture of at least two linear aliphatic dicarboxylic acids with 5 to 12 carbon atoms is employed as crosslinker component B).

10. Powder lacquer according to Claim 4, **characterised in that** a mixture of at least three linear aliphatic dicarboxylic acids with 5 to 12 carbon atoms is employed as crosslinker component B).

11. Powder lacquer according to Claim 4, **characterised in that** a mixture of polycarboxylic acids that has been homogeneously premixed in a step placed upstream of the production of powder lacquer is employed as crosslinker component B).

12. Use of powder lacquers according to Claim 4 for the coating of arbitrary substrates.

13. Use of the powder lacquer according to Claim 4 for the production of clear lacquers for automobiles.

14. Substrates coated by means of powder lacquers according to Claim 4.

## Revendications

1. Mélanges d'acides polycarboxyliques solides au-dessous de 45°C et liquides au-dessus de 160°C, ces mélanges consistant en au moins deux acides polycarboxyliques contenant jusqu'à 20 atomes de carbone et fondant chacun au-dessus de 95°C, avec au moins 5 % en poids de l'acide polycarboxylique ayant le point de fusion le plus bas et au moins 10 % en poids de l'acide polycarboxylique ayant le point de fusion le plus élevé par rapport à tous les acides polycarboxyliques présents en proportions d'au moins 5 % en poids dans le mélange.

2. Mélanges selon la revendication 1, **caractérisés en ce qu'**ils consistent en au moins 10 % en poids de l'acide polycarboxylique ayant le point de fusion le plus bas et au moins 20 % en poids de l'acide polycarboxylique ayant le point de fusion le plus élevé par rapport à tous les acides polycarboxyliques présents en proportions d'au moins 5 % dans le mélange.

3. Mélanges selon la revendication 1, **caractérisés en ce qu'**ils consistent en au moins 15 % en poids de l'acide polycarboxylique ayant le point de fusion le plus bas et au moins 25 % en poids de l'acide polycarboxylique ayant le point de fusion le plus élevé par rapport à tous les acides polycarboxyliques présents en proportions d'au moins 5 % en poids dans le mélange.

4. Produit de revêtement en poudre durcissant sous l'action de la chaleur, qui contient
A) un composant liant portant des groupes réactifs avec les groupes carboxyles et
B) un mélange, solide au-dessous de 40°C et liquide au-dessus de 160°C, d'au moins deux acides polycarboxyliques contenant jusqu'à 20 atomes de carbone et fondant chacun au-dessus de 95°C, avec au moins 5 % en poids de l'acide polycarboxylique ayant le point de fusion le plus bas et au moins 10 % en poids de l'acide polycarboxylique ayant le point de fusion le plus élevé par rapport à tous les acides polycarboxyliques présents en proportions d'au moins 5 % en poids dans le mélange, en tant que composant réticulant,
et le cas échéant
C) d'autres produits auxiliaires et additifs connus dans le domaine des produits de revêtement en poudre,
sous réserve que les composants A) et B) sont présents à des proportions relatives telles que, pour chaque groupe réactif avec les groupes carboxyles du composant A) il y ait 0,7 à 1,5 groupe carboxyle du composant B).

5. Produit de revêtement en poudre selon la revendication 4, **caractérisé en ce que** l'on utilise en tant que composant liant A) une résine de polyacrylate à fonctions époxy.

6. Produit de revêtement en poudre selon la revendication 4, **caractérisé en ce que** l'on utilise en tant que composant réticulant B) un mélange d'au moins deux acides polycarboxyliques consistant pour au moins 10 % en poids en l'acide polycarboxylique ayant le point de fusion le plus bas et au moins 20 % en poids de l'acide polycarboxylique ayant le point de fusion le plus élevé par rapport à tous les acides polycarboxyliques présents en proportion d'au moins 5 % en poids dans le mélange.

7. Produit de revêtement en poudre selon la revendication 4, **caractérisé en ce que** l'on utilise en tant que composant réticulant B) un mélange d'au moins deux acides polycarboxyliques consistant pour au moins 15 % en poids en l'acide polycarboxylique ayant le point de fusion le plus bas et pour au moins 25 % en poids en l'acide polycarboxylique ayant le point le plus élevé par rapport à tous les acides polycarboxyliques présents en proportions d'au moins 5 % en poids dans le mélange.

8. Produit de revêtement en poudre selon la revendication 4, **caractérisé en ce que** l'on utilise en tant que composant réticulant B) un mélange d'au moins deux acides polycarboxyliques aliphatiques et/ou cycloaliphatiques contenant 4 à 20 atomes de carbone.

9. Produit de revêtement en poudre selon la revendication 4, **caractérisé en ce que** l'on utilise en tant que composant réticulant B) un mélange d'au moins deux acides dicarboxyliques aliphatiques linéaires contenant 5 à 12 atomes de carbone.

10. Produit de revêtement en poudre selon la revendication 4, **caractérisé en ce que** l'on utilise en tant que composant réticulant B) un mélange d'au moins trois acides dicarboxyliques aliphatiques linéaires contenant 5 à 12 atomes de carbone.

11. Produit de revêtement en poudre selon la revendication 4, **caractérisé en ce que** l'on utilise en tant que composant réticulant B) un mélange d'acides polycarboxyliques formé et homogénéisé dans une opération préalable à la préparation du produit de revêtement en poudre.

12. Utilisation des produits de revêtement en poudre selon la revendication 4, pour le revêtement de supports quelconques.

13. Utilisation du produit de revêtement en poudre selon la revendication 4, pour la préparation de vernis clairs pour l'automobile.

14. Supports revêtus par des produits de revêtement en poudre selon la revendication 4.
